# EUROPEAN PATENT SPECIFICATION

(11) **EP 3 629 289 B1**
(45) Date of publication and mention of the grant of the patent: **13.07.2022**
(21) Application number: 18197271.2
(22) Date of filing: 27.09.2018
(51) Int. Cl.: G06T 7/33

(54) **METHOD FOR FITTING A FIRST DATA SET TO A SECOND DATA SET**
VERFAHREN ZUR ANPASSUNG EINES ERSTEN DATENSATZES AN EINEN ZWEITEN DATENSATZ
PROCÉDÉ DE MONTAGE D'UN PREMIER ENSEMBLE DE DONNÉES SUR UN SECOND ENSEMBLE DE DONNÉES

(43) Date of publication of application: 01.04.2020
(73) Proprietor: Veoneer Sweden AB, 447 83 Vårgårda (SE)
(72) Inventor: Björkeson, Felix, Vendelsö (SE); Lovtjärn, André, 74941 Enköping (SE)
(74) Representative: Westpatent AB

(56) References cited:
- WO-A1-2017/096299
- VLAMINCK MICHIEL ET AL: "Multi-resolution ICP for the efficient registration of point clouds based on octrees", 2017 FIFTEENTH IAPR INTERNATIONAL CONFERENCE ON MACHINE VISION APPLICATIONS (MVA), MVA ORGANIZATION, 8 May 2017 (2017-05-08), pages 334-337, XP033126595, DOI: 10.23919/MVA.2017.7986869 [retrieved on 2017-07-19]
- FOSSEL JOSCHA ET AL: "NOctoSLAM: Fast octree surface normal mapping and registration", 2017 IEEE/RSJ INTERNATIONAL CONFERENCE ON INTELLIGENT ROBOTS AND SYSTEMS (IROS), IEEE, 24 September 2017 (2017-09-24), pages 6764-6769, XP033266745, DOI: 10.1109/IROS.2017.8206594 [retrieved on 2017-12-13]

## Description

The present disclosure relates to methods and devices for fitting data points in a first data set to data points in a second data set. Aspects of the disclosure also relates to methods for registering a model or source data set in relation to a target data set. The disclosed techniques are applicable, e.g., to captured LIDAR data in vehicular applications, and for scan matching or pose registration in general.

Alignment of sensor measurement data with respect to reference data, sometimes referred to as pose registration or scan matching, is a challenging problem encountered in many different applications. Light Detection and Ranging (LIDAR) systems, for instance, often output detection results as scans comprising data points, which data points are to be associated with a frame of reference before they can be interpreted and used for, e.g., mapping, localization, or navigation. The problem is also encountered when dealing with data from, e.g., Time of Flight (TOF) camera systems, structured light systems, and in stereo vision systems.

The same registration problem occurs when processing data from other sensor types, such as Radio Detection and Ranging (RADAR) sensors, Sound Navigation and Ranging (SONAR) sensors, and the like.

The iterative closest point (ICP) method is a known sensor data registration method which can be used to register new data in relation to a given reference system or to a set of reference data points. The ICP algorithm was described by Chen and Medioni in "Object modelling by registration of multiple range images", Image and Vision Computing, vol. 10, issue 3, April 1992, and by Besl and McKay in "A method for registration of 3-D shapes", IEEE Transactions on Pattern Analysis and Machine Intelligence, vol. 14, issue 2, February 1992.

However, most known registration methods including ICP suffer from high complexity and often require large computational effort. Such high complexity and computational demands may be an issue in real-time applications or where processing resources are limited.

There has been some work done towards simplifying the ICP method. In "Multi-resolution ICP for the Efficient Registration of Point clouds based on Octrees", International Conference on Machine Vision Applications, Nagoya, Japan, May 2017, Vlaminck, Luong and Philips describe a method for scan matching which has a reduced complexity compared to the original version of ICP. However, the complexity associated with fitting one data set to another data set remains prohibitive.

WO 2017/096299 A1 describes a global registration method that can be efficiently used with large scale data, large baseline, little overlap, and no/little pose information/relative assignment information.

The invention is set out in the appended set of claims.

It is an object of the present disclosure to present methods and devices for fitting a first data set to a second data set which are associated with a reduced complexity and reduced computational demands compared to known methods.

This object is achieved by a method for fitting a first set of data points to a second set of data points. The method comprises obtaining first and second sets of data points and defining a common data structure comprising cells organized hierarchically in N levels i=1,2,...,N, where i=1 is a trunk level of the common data structure and wherein each cell is associated with a respective cell range of data point values. The method also comprises associating data points in the first set and in the second set with cells at an initialization level of the common data structure equal to or above the trunk level based on cell ranges and on data point values. The method is an iterative method which, for each level j, starting from the initialization level, comprises determining at least one cell feature for one or more cells and for each data set based on data points associated with respective cells, and determining a level-transform Tj for level j based on differences between respective cell features determined at level j. The method also fits the second data set to the first data set at level j by reducing differences between cell features, and associates data points in the first set, and data points transformed by level-transform Tj in the second set, with cells at a next level j+1 of the common data structure based on cell ranges at level j+1, until a stopping criterion is fulfilled. The method then comprises fitting the first set of data points to the second set of data points by accumulating the determined level-transforms Tj.

The initialization level, identified by iteration index j, may be equal to the trunk level, in which case iterations are started from the trunk level. The initialization level may however also correspond to a higher level in the common data structure. Herein, higher levels in the data structure correspond to a finer granularity in the hierarchical structure, i.e., i=2 is a higher level compared to i=1.

Advantageously, the method does not require an association or correspondence step where data points in the first set are mapped to corresponding data points in the second step, which is a computationally intensive operation. Instead, the correspondence problem is implicitly solved by the cell assignments, which is a much less computationally intensive method.

According to aspects, the first and/or second set of data points comprises LIDAR measurement data and/or RADAR measurement data. It is an advantage that the disclosed method is applicable to different types of sensor data. In fact, different types of sensor data can be used in the same data structure, without significant modifications of the method.

According to aspects, defining the common data structure comprises discarding cells comprising insufficient information to extract a cell feature from respective data points in the first data set and/or discarding cells comprising data points associated with one or more moving objects. This means that the data structure becomes sparse in scenarios where data points are clustered or sparsely distributed. The common data structure can be more efficiently processed after discarding cells with insufficient information to extract respective cell features. The discarding can also be used for removing unwanted data from the data structure, e.g., data points related to moving objects.

According to aspects, a cell feature comprises a data point value centroid, and the level transform Tj is determined to minimize a respective objective function fj based on centroids of data point values in each cell at iteration level j. Using cell centroids is an efficient yet robust way to represent data points, which is an advantage.

According to aspects, the objective function fj is based on a point-to-point distance or a point-to-plane or a plane-to-plane distance metric. Thus, advantageously, the disclosed method is versatile and can be used with many different types of objective function. The objective function can be chosen according to situation, which improves performance. The objective function may also comprise a combination of different metrics, possibly weighted by weights. It is appreciated that the objective function is not limited to the examples mentioned herein.

According to aspects, the objective function is weighted by weights associated with the cells. The weights may for instance be determined based on the number of data points associated with each cell and/or based on normal vector angles in each cell and/or based on time stamps associated with the data points in each cell. The weights can be used to increase robustness against outlier data points, and to improve method performance in general.

According to some aspects, the first set of data points corresponds to target data, and the second set of data points corresponds to model or source data. According to some other aspects, the second set of data points corresponds to target data, and the first set of data points corresponds to source or model data. Herein, it is appreciated that both target and source data may comprise sensor measurement data. Consequently, the method is versatile in that it can be used starting from one or the other of the first and the second data set. Also, an inverse registration can be determined by exchanging target and source data sets used for the first and second data set.

According to aspects, accumulating the determined level-transforms Tj for each iteration level j comprises multiplying matrices representing linear transforms for each respective level j. Linear transforms are commonly used in many different applications. It is an advantage that the method is suitable for use with such linear transforms since they allow for a computationally efficient implementation in digital logic.

According to aspects, the trunk level i=1 of the data structure corresponds to a cell in a larger hierarchical data structure. This means that the method can be run on a larger data set after partitioning the larger data set into a plurality of first and second data sets, i.e., into corresponding pairs of subsets of data points based on data point values. The disclosed method can then be run on each pair to obtain a local registration.

The objective is also obtained by a sensor system control unit for a sensor system. The control unit is arranged to fit a first set of data points to a second set of data points. The sensor system control unit comprises an obtaining module configured to obtain first and second sets of data points, a defining module configured to define a common data structure comprising cells organized hierarchically in N levels i=1,2,...,N, where i=1 is a trunk level of the common data structure and wherein each cell is associated with a respective cell range of data point values. The sensor system control unit also comprises an associating module configured to associate data points in the first set and in the second set with cells at an initialization level equal to or above the trunk level of the common data structure, based on cell ranges and on data point values. The sensor system control unit is arranged to, for each level j, starting from the initialization level, determine, by a first determining module, at least one cell feature for one or more cells and for each data set based on data points associated with respective cells. The sensor system control unit is also arranged to determine, for each level j, by a second determining module, a level-transform Tj for level j based on a difference between the cell features determined at level j, and to fit the second data set to the first data set at level j by reducing differences between cell features, and also associate, by the associating module, data points in the first set, and data points in the second set transformed by level-transform Tj, with cells at a next level j+1 of the common data structure based on cell ranges at level j+1, until a stopping criterion is fulfilled.

The sensor system control unit further comprises a fitting module configured to fit the first set of data points to the second set of data points by accumulating the determined level-transforms Tj .

The sensor system control unit is configured to execute the methods described herein and is therefore associated with the same advantages as was mentioned above.

### BRIEF DESCRIPTION OF THE DRAWINGS

The present disclosure will now be described in detail with reference to the appended drawings, where:
Figure 1 shows a schematic top view of a vehicle with a sensor system;
Figures 2-3 illustrate examples of hierarchical data structures;
Figure 4 is a flow chart illustrating methods;
Figures 5a-5e show an example technique for fitting data sets
Figure 6 is a flow chart illustrating methods;
Figures 7-8 schematically illustrate sensor system control units; and
Figure 9 shows an example computer program product;

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

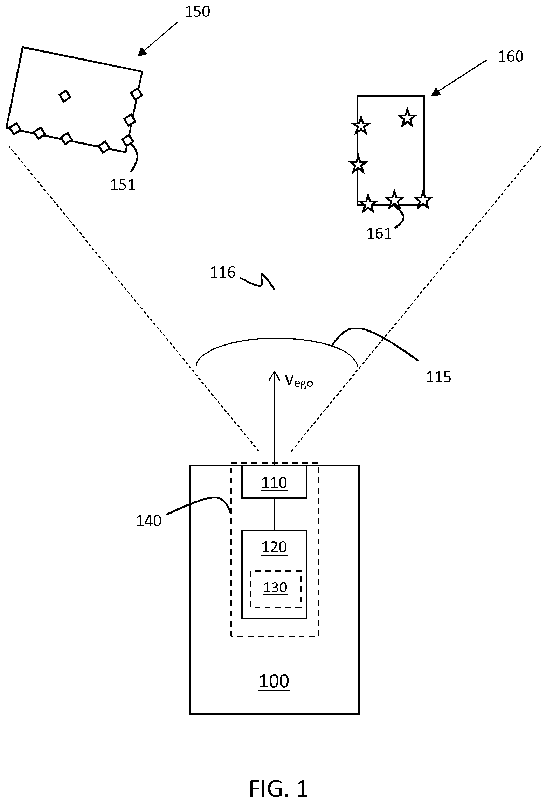

Figure 1 shows a schematic top view of a vehicle 100 equipped with a vehicle sensor system 140. The vehicle moves in a direction with velocity vector v_{ego}. The vehicle sensor system 140 comprises a vehicle sensor 110 and a sensor system control unit 120. An optional storage module 130 may also be comprised in the sensor system control unit 120. The storage module 130 will be discussed in more detail below.

The sensor system control unit 120 is arranged to control operation of the vehicle sensor 110, and to obtain data from the vehicle sensor, such as detections or data points corresponding to objects 150, 160 in the vicinity of the vehicle 100.

The vehicle sensor 110 may comprise a single sensor or a plurality of sensors. For instance, the vehicle sensor 110 may comprise any of a LIDAR sensor, a RADAR sensor, a camera sensor, or an ultrasound sensor. The vehicle sensor may also comprise any of a TOF camera system, a structured light system, and a stereo vision system.

The vehicle sensor 110 is arranged to generate a number of detections or data points comprising coordinates in a relative coordinate system, i.e., relative to the location and orientation of the sensor. The coordinates may be cartesian coordinates or they may be polar coordinates.

The detections may also comprise additional data, such as light intensity values, colour data, signal strength values, frequency values, and measures of signal-to-noise ratio (SNR).

One or more time-stamps may also be associated with the detections. The time stamps may be assigned per data point or be common to a set of data points. A LIDAR system using a rolling shutter would most likely assign one-time stamp per data point, but it is also plausible to assign a single time stamp per scan or per data set, albeit with loss of accuracy.

A data point, herein, is a value or collection of values representing a configuration of an object or part of an object in an environment, such as in a vicinity of a vehicle. For instance, in case of a LIDAR sensor, a data point may comprise a value indicating a range and an angle from the lidar sensor transceiver, or a set of coordinates describing a point in three-dimensional space. A data point may also comprise a velocity estimate obtained from a Doppler shift of a received waveform, and an angle or bearing obtained from an angle of arrival of a reflected sensor signal waveform. The velocity data may in some cases be quantized into moving or stationary, since some aspects of the methods disclosed herein comprises discarding data points related to moving objects.

The storage module 130 may store map data comprising information about a surrounding environment of the vehicle 100.

New detections are produced more or less continuously by the sensor in cycles or scans. Most sensor systems generate detection data on a regular basis, with a cycle interval of T seconds. For instance, the interval T may correspond to a frame length of a radar signal, or to an image processing duration of a camera-based sensor, or to a scan period of a laser scanner. Detections may be stored by the storage module 130 and retrieved for processing as needed.

The vehicle sensor 110 is associated with a field of view 115, which may be a 360-degree field of view, or a more limited field of view as shown in Figure 1. Two objects 150, 160 are located in the field of view 115. A first object 160 generates detections marked by stars 161. A second object generates detections marked by squares 151.

The first and the second object may be tracked over time by a tracking algorithm which associates detections with the different objects and continuously estimates, e.g., location and heading of the first and second object. Such tracking algorithms may robustly estimate the heading of a tracked object over time even if signal to noise ratio temporarily is reduced, or only a few detections are obtained in some cycles. Examples of such tracking algorithms include Kalman filters, extended Kalman filters, and Particle filters.

In order to make use of acquired data, new data sets must often first be aligned with a reference coordinate system or be registered relative to another data set. Such scan matching plays a crucial role in, e.g., simultaneous localization and mapping (SLAM) applications.

There are known methods for aligning one data set with another data set, some of which were mentioned above.

Many of the known methods for fitting data points in one set to data points in another set relies on finding correspondences between the two sets. Given such correspondencies, a transform can be found which, when applied to one set, fits that data set to the other data set in the sense that distances between corresponding data points are minimized.

Data points in a first and in a second data set comprise spatial coordinates such as illustrated in Figure 1. Suppose also that it is known that some data points in the first set have a one-to-one correspondence with data points in the second set. By determining a transform which, when applied to data points in the first set, minimizes differences between the corresponding data points, the first data set can be aligned with the second data set.

The task of finding correspondencies between two or more data sets is usually computationally intensive and often represents a significant contribution to overall complexity.

The techniques disclosed herein for fitting a first set of data points to a second set of data points provide for reduced computational complexity by avoiding a computationally intensive solution of the correspondence problem.

The disclosed technique, in short, comprises defining a hierarchical data structure which is common to both first and second data sets. This common hierarchical data structure comprises cells associated with respective cell ranges. Each data point from the first and from the second data set can be assigned or associated to a cell based on the cell range and on data point values. Considering that data points describe spatial coordinates, and the cell ranges partition the space, then a data point will be associated with cells having cell ranges that comprises the data point coordinate. After associating data points with cells in the common data structure, cell features are extracted per cell from each data set based on respective associated data points. Examples of cell features that are applicable are, e.g., data point centroids and normal vectors, or sample distribution functions. An objective function for data set fitting is then defined based on distances between the determined cell features for the two sets, i.e., the cell feature for a given cell determined from the first set of data points is compared to the cell feature for the same cell but determined for the other data set. This way there is no correspondence problem that needs to be solved, since correspondence is implicitly defined by the common data structure cell indices. The objective function can, for instance, comprise point-to-plane, point-to-point or plane-to-plane distances between cell centroids in the first and in the second data set. The objective function can also be a combination of different metrics, which combination may optionally be weighted according to some weighting strategy.

The method is iterated with more and more refined cell resolution, i.e., traversing the hierarchical common data structure through higher and higher levels. A level-transform is determined at each level to minimize a difference between cell features at that level. The level-transform is then applied to one data set, and the process repeated at the next level in the hierarchical common data structure. The process is stopped when a stopping criterion has been reached, whereupon the final fit of the first data set to the second data set is given by a concatenation or accumulation of level-transforms determined for the different levels. The iterations may be started from an initialization level corresponding to the trunk level of the common data structure or be started from a higher level. The iterations may involve every consecutive level starting from the initialization level or involve a specific pre-determined sequence of levels, such as every second level.

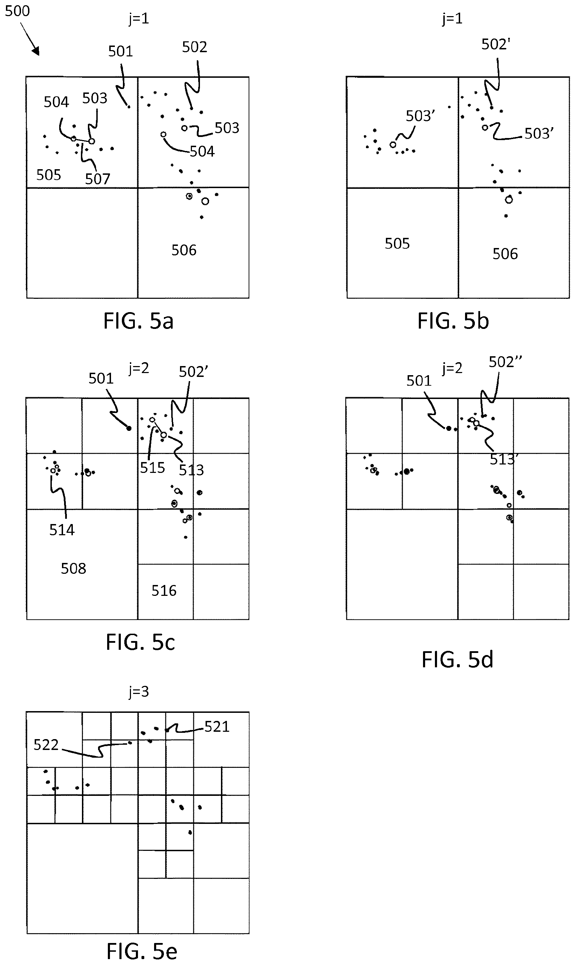

The disclosed method will be further exemplified and discussed in connection to Figures 5a-5e below.

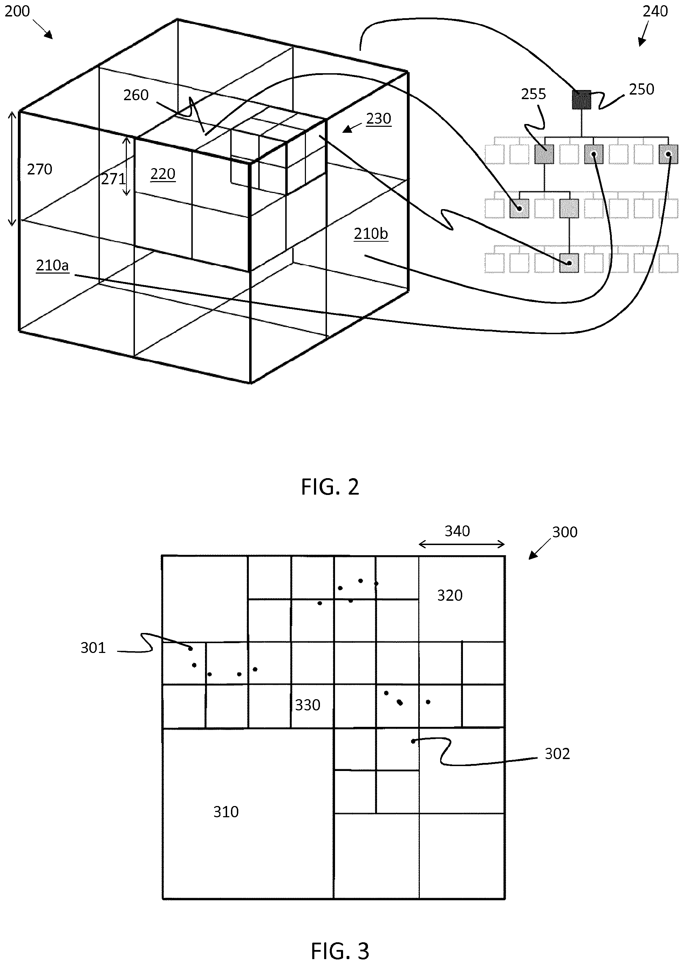

Figure 2 illustrates an example hierarchical data structure 200. The structure in Figure 2 is known as an octree. An octree is a hierarchical tree data structure in which each node or cell has eight children. Octrees are often used to partition a three-dimensional space by recursively subdividing it into eight cells 210a, 210b,220, 230, or octants. The Octree can also be visualized by a tree structure 240, where a trunk node 250 has eight branches. Each branch leads to a node or cell 255 at a next level which again branches out into eight new branches.

Each cell 210a, 210b, 220, 230 is associated with a cell range 270, 271, where the different cell ranges partition a space at different resolutions. A data point 260 is associated with a unique cell 220 at any given level of the octree based on the data point value and on the cell ranges at the different levels.

A quadtree 300, schematically illustrated in Figure 3, is a two-dimensional version of the octree. Like the octree, a quadtree divides a two-dimensional space into cells 310, 320, 330 having cell ranges 340 at different resolutions at different levels of the quadtree. Data points 301, 302 are again associated with unique cells at each level in the quadtree.

It is appreciated that hierarchical data structures, such as the octree and quadtree data structures, can be efficiently processed by discarding irrelevant cells, e.g., by inserting null pointers at appropriate locations in a memory structure. For instance, cells not associated with any data points, or cells not associated with enough data points to determine a relevant cell feature such as a normal vector, may be discarded to improve processing efficiency. In the example of Figure 3, cell 310 does not contain any data points, and could therefore potentially be ignored during further processing. It may also be advantageous to discard cells comprising data points associated with moving objects, since such data points may impact the end transformation result negatively.

Other examples of hierarchical data structures include VDB trees, i.e., Volumetric Dynamic grid B-trees, and B+trees.

It is appreciated that the disclosed techniques have a broad range of applicability and are not limited to any particular form of senor data type or hierarchical data structure.

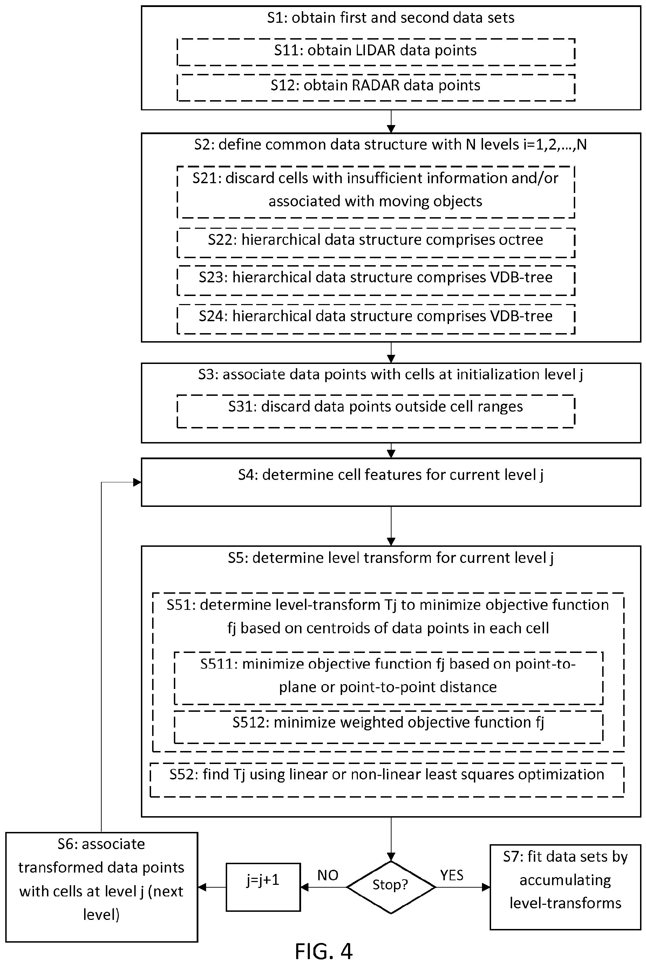

Figure 4 is a flowchart illustrating methods. In particular, there is shown a method for fitting a first set of data points to a second set of data points. The method comprises obtaining S1 first and second sets of data points. The obtaining may comprise directly obtaining data from a sensor 110 or obtaining data from a memory storage device 130. The obtaining may also comprise obtaining data points from different sensors potentially deployed at different locations.

The method also comprises defining S2 a common data structure comprising cells organized hierarchically in N levels i=1, 2,...,N, where i=1 is a trunk level of the common data structure. Each cell is associated with a respective cell range of data point values. Some relevant data structures were discussed above, e.g., the octree and the quadtree. However, the disclosed methods are applicable also to other hierarchical data structures. The number of levels N in the data structure can be fixed or adapted dynamically over time. It is appreciated that the number of levels may be related to a resolution of the data structure, such as a spatial resolution.

Herein, a cell range describes the range of data points that are assigned to a given cell. For instance, in case spatial coordinates are being registered, a cell range comprises ranges of coordinates, e.g., defining cubes or cuboids in space. For instance, suppose a first cell is associated with cell range from one to five, and a second cell is associated with a cell range from five to ten, then a data point having value three would be associated with the first cell, while a data points having value eight would be associated with the second cell. In case the data structure is a quadtree or an octree, then the cell ranges will be non-overlapping. This is, however, not a necessary feature. The cell ranges can also be defined to be overlapping, in which case a data point can be associated with more than one cell in the data structure.

The method comprises associating S3 data points in the first set and in the second set with cells at an initialization level equal to or above the trunk level of the common data structure based on cell ranges and on data point values.

It is appreciated that the initialization level may equal the trunk level, in which case iterations start from the trunk of the structure. However, iterations can also be started at a higher level in the data structure, i.e., at some level i>1. Also, as will be discussed in more detail below, the trunk level is not necessarily a global trunk level. Rather, the trunk level may be a node comprised in a larger hierarchical data structure. Consequently, the disclosed methods may be performed on a subset of a larger hierarchical data structure, and/or be iterated only on a part of the common data structure.

It is appreciated that the disclosed methods may be executed at different spatial resolutions at different areas in a vehicle sensor field of view 115. In other words, the trunk level i=1 of the data structure may correspond to a cell in a larger hierarchical data structure.

Given the common data structure and associations between data points and cells, the method proceeds in an iterative fashion; For each level indexed by iteration index j, starting from the initialization level, the method comprises; determining S4 at least one cell feature for one or more cells and for each data set based on data points associated with respective cells. A cell feature need not necessarily be determined for each cell in the common data structure at the current level j. However, the number of determined cell features is likely to influence the end result. More cell features determined from a larger amount of data points may improve end results, while cell features determined from a smaller amount of data points may cause degradation in the accuracy of the fitting. Examples of relevant cell features will be given below.

The method also comprises determining S5 a level-transform Tj for level j based on differences between respective cell features determined at level j, to fit the second data set to the first data set at level j by reducing differences between cell features. This means that, for a given cell, the cell feature determined based on the first set of data points is compared to the cell feature determined based on the second set of data points. Had the two data sets been close to each other, i.e., had there been a fit between the data sets a-priori, then the cell features would have been similar and v.v. Thus, to bring the two data sets closer to each other, a transform aimed at reducing the difference is found and applied to one of the sets.

The transforms may be determined using, e.g., non-linear or linear least squares optimization methods S52. Other optimization methods can also be considered, such as random sample consensus (RANSAC) based methods. Such optimization methods are known and will not be discussed in detail here.

It is appreciated that iterations need not necessarily be performed for every level in the tree. Rather, some levels can be skipped as would be realized by the skilled person. Thus, it is possible to perform the iteration for each level j in a pre-determined sequence of levels, starting from the initialization level. The pre-determined sequence of levels may, e.g., be i={1,4,6,7,8,9,10}, or i={1,2,3,5,8,10}.

The method further comprises associating S6 data points in the first set, and data points transformed by level-transform Tj in the second set, with cells at a next level j+1 of the common data structure based on cell ranges at level j+1; until a stopping criterion is fulfilled. This means that one set, often the reference set, is associated as is with cells at the next level in the common data structure, while the other set, often the target set, is first transformed by the level transform Tj, before being associated with cells at the next level j+1. Thus, hopefully, the fit is gradually improved as the method iteratively traverses through increasing levels of the common data structure. The stopping criterion may be based on a fixed number of iterations, on a difference measure between the two data sets, on a processing time measure, or the like. The stopping criterion may be fixed or dynamically adapted to account for changing operating conditions.

When the stopping criterion has been reached, the method comprises fitting S7 the first set of data points to the second set of data points by accumulating the determined level-transforms Tj. The level transforms comprises linear transforms, represented by matrix multiplications. Such matrix multiplications may cause any of coordinate translations, rotations, and scaling. Given a sequence of such linear transforms, and end transform may be found my multiplying the sequence of transforms. In other words, accumulating the determined level-transforms Tj for each level j comprises multiplying matrices representing linear transforms for each respective level j.

It is appreciated that, in further embodiments not covered by the claimed invention, other types of transforms may also be applied, e.g., non-linear transforms. These transforms must then be accumulated in an appropriate serial or parallel fashion depending on the type of transform.

It is appreciated that, according to the terminology used herein, fitting the first set of data points to the second set of data points constitutes registering the second set of data points in relation to the first set of data points, or aligning the second set of data points in relation to the first set of data points, or matching the second set of data points in relation to the first set of data points.

According to some aspects, the first and/or second set of data points comprises LIDAR measurement data S11 and/or RADAR measurement data S12. The method is particularly suitable to this type of detection data, which is often sparse an inhomogeneous. A data point then comprises spatial information in the form of a coordinate, a range, and/or an angle as discussed above.

According to some aspects, defining the common data structure comprises discarding S21 cells comprising insufficient information to extract a cell feature from respective data points in the first data set and/or discarding cells comprising data points associated with one or more moving objects. By discarding cells from the common data structure, e.g., by inserting NULL pointers in the data structure, processing efficiency can be improved.

The method may comprise discarding cells to which no data points have been associated, i.e., which are empty, or discarding cells where it is estimated that a sufficiently accurate cell feature cannot be determined based on the associated data points. This could for instance be the case when normal vectors are comprised in the cell feature to describe an estimated plane. Determining such normal vectors requires a minimum number of detection data points depending on dimension, and the accuracy of the normal vector often improves with the number of data points.

Also, when doing global registration for computing, e.g., ego-motion, it is often preferred to discard moving objects, such as cars, since they may impact registration results negatively. In general, when finding a transform between point clouds i.e., between two sets of data points, the transform may not fit very well if there are moving objects in one or both data sets.

Herein, discarding cells may comprise, e.g., deleting already created cells or may comprise not creating or not initializing cells when constructing the common data structure.

It is appreciated that the disclosed method is not limited to a particular type of data structure, for instance, the method can be applied to any of an octree S22, a quadtree, an octree map, a VDB-tree S23, or a B+tree.

According to some aspects, the method comprises defining S24 the common data structure based on the first set of data points. This way of defining the common data structure is especially efficient in that the second set of data points is not accounted for when defining the data structure, i.e., when setting cell ranges, number of levels, and trunk level center. The data structure is defined based on data points in one of the sets, and the data points in the other set are then associated to the data structure, which then becomes a common data structure for both sets of data points.

According to aspects, the associating comprises discarding S31 data points not comprised within any cell range of data point values. It is not necessarily so that all obtained data points can be associated with a cell in the common data structure. This may for instance be the case if some cells have been discarded as discussed above, or if the common data structure total cell range does not cover the entire field of view of the sensor system.

According to aspects, a cell feature comprises a data point value centroid, and the level transform Tj is determined S51 to minimize a respective objective function fj based on centroids of data point values in each cell. A centroid is a mean value of data points or a weighted mean value of data points. For instance, the centroid may indicate a mass center of a number of coordinates. The centroid may be determined as an average value, or as a weighted average value, where the weights are determined based on, e.g., SNR or the like.

According to aspects, the objective function fj is based on S511 a point-to-point distance or a point-to-plane distance or a plane-to-plane distance metric. A point to point distance may comprise a Euclidean distance, or a squared Euclidean distance, or the like. A point to plane distance was defined in the disclosure "Multi-resolution ICP for the Efficient Registration of Point clouds based on Octrees" International Conference on Machine Vision Applications, Nagoya, Japan, May 2017, Vlaminck, Luong and Philips. It is appreciated that the point-to-plane and plane-to-plane distance measures require the extraction of a normal vector that defines a plane associated with data points in a cell. This normal vector can be estimated based on the data points in the cell, or based on other sources of information, such as map data stored in the storage module 130.

In case cell features comprise distribution functions, such as sample distribution functions, then a Kullback-Liebler distance may also be relevant.

According to aspects, the objective function is weighted S512 by weights associated with the cells. The weights can be determined based on the number of data points associated with each cell giving more weight to higher numbers of data points, and/or based on normal vector angles in each cell. Weights can also be based on time stamps.

According to some aspects, the first set of data points corresponds to target data, and the second set of data points corresponds to model or source data. According to some other aspects, the second set of data points corresponds to target data, and the first set of data points corresponds to source or model data. Thus, it is appreciated that the disclosed methods can be applied starting from target data or from reference data.

It is also appreciated that both target data and source data may comprise sensor measurement data.

Figures 5a-5e illustrate an example sequence of operations that illustrate aspects of the disclosed techniques. The sequence of Figures 5a-5e show one example where a quadtree 500 is used to fit one data set against another data set. Figure 5a shows a trunk level i=1 of the common data structure, where data points 501, 502 from the first and from the second data set, respectively, has been associated to cells 505, 506. Cell features have been determined, which comprise centroids 503, 504 determined based on the two data sets. Differences 507 between the centroids have also been determined.

Figure 5b shows the result of determining and applying a level transform Tj determined for iteration level j=1. It can be seen that the data points 502' in the second data set have been transformed and that the cell features 503' after transformation have shifted to be closer to each other.

The data points 501 from the first data set 521, and the transformed data points 502' from the second data set are then associated with cells at the next level j=2 of the common data structure. This association is illustrated in Figure 5c. It is noted that cell 508 is removed from consideration, since there were no data points associated to this cell at the trunk level, which means that a centroid cannot be determined. Cell features 513, 514 are again extracted and differences 515 between cell features determined. A new level-transform Tj is determined for level j=2 and applied to the data points in the second set of data points. This results in further transformed data points 502", which are schematically illustrated in Figure 5d. Figure 5d also shows the cell feature 513' after transformation by the second level-transform.

Figure 5e schematically shows the result after stopping at level j=3. It can be seen that data points from the first data set 522 and transformed data points from the second data set 521 now exhibit a large degree of similarity, i.e., the first and the second data sets have been aligned.

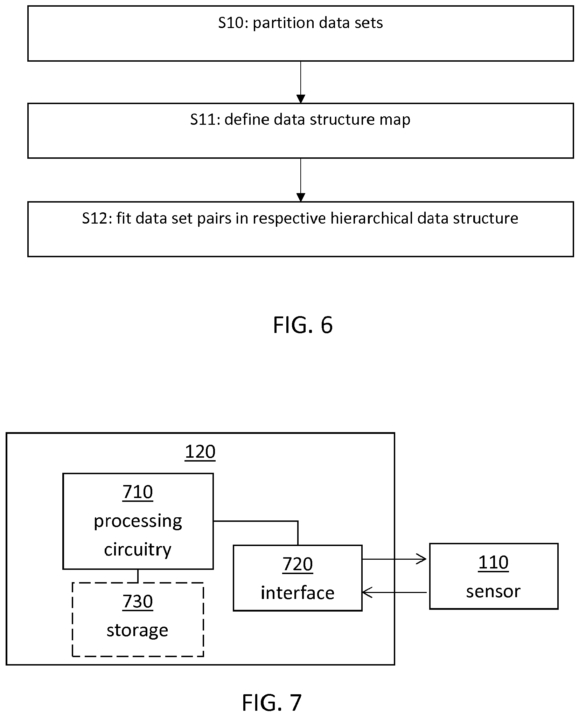

Figure 6 is a flowchart illustrating a method for fitting a third set of data points to a fourth set of data points. The method comprises partitioning Sb1 the third and fourth sets of data points into corresponding pairs of subsets of data points based on data point values, defining Sb2 a common data structure map comprising a plurality of hierarchical common data structures, and fitting Sb3 each pair of subsets of data points to each other in a respective hierarchical common data structure according to the above disclosed methods.

This means that the above discussed methods are applicable also to subsets of larger data sets. For instance, the sensor field of view 115 may be partitioned into segments, and separate common data structures can be defined for each of the segments. One example of such data structures is an octomap structure which comprises a number of octrees arranged throughout a scene or along a ground plane.

The methods and techniques discussed above can be realized in various forms of hardware. Figure 7 schematically illustrates, in terms of a number of functional units, the components of a processing node according to an embodiment of the above discussions. Processing circuitry 710 is provided using any combination of one or more of a suitable central processing unit CPU, multiprocessor, microcontroller, digital signal processor DSP, etc., capable of executing software instructions stored in a computer program product, e.g. in the form of a storage medium 730. The processing circuitry 710 may further be provided as at least one application specific integrated circuit ASIC, or field programmable gate array FPGA.

Particularly, the processing circuitry 710 is configured to cause the processing node to perform a set of operations, or steps. For example, the storage medium 730 may store the set of operations, and the processing circuitry 710 may be configured to retrieve the set of operations from the storage medium 730 to cause the processing node to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The processing node may further comprise a communications interface 720 for communications with at least one external device. As such the communication interface 720 may comprise one or more transmitters and receivers, comprising analogue and digital components and a suitable number of ports for wireline or wireless communication.

The processing circuitry 710 controls the general operation of the processing node e.g. by sending data and control signals to the communication interface 720 and the storage medium 730, by receiving data and reports from the communication interface 720, and by retrieving data and instructions from the storage medium 730. Other components, as well as the related functionality, of the node 110 are omitted in order not to obscure the concepts presented herein.

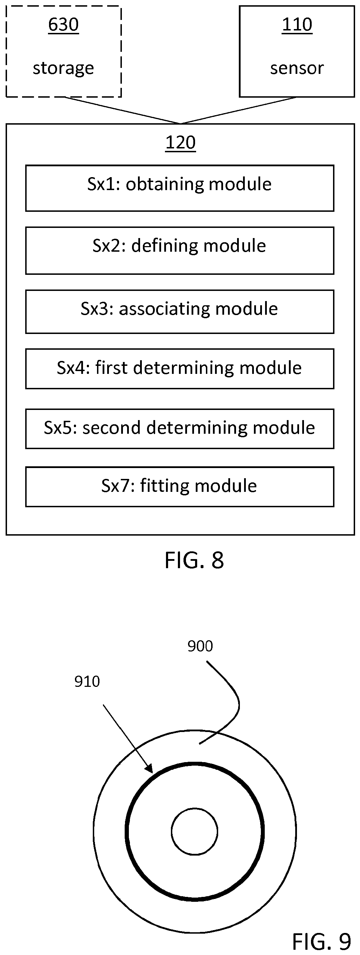

Figure 8 schematically illustrates, in terms of a number of functional units, a sensor system control unit 120 for a sensor system, arranged to fit a first set of data points to a second set of data points. The sensor system control unit comprises;
an obtaining module Sx1 configured to obtain first and second sets of data points;
a defining module Sx2 configured to define a common data structure comprising cells organized hierarchically in N levels i=1,2,...,N, where i=1 is a trunk level of the common data structure and wherein each cell is associated with a respective cell range of data point values;
an associating module Sx3 configured to associate data points in the first set and in the second set with cells at an initialization level equal to or above the trunk level of the common data structure based on cell ranges and on data point values;
wherein the sensor system control unit is arranged to, for each level j, starting from the initialization level;
determine, by a first determining module Sx4, at least one cell feature for one or more cells and for each data set based on data points associated with respective cells;
determine, by a second determining module Sx5, a level-transform Tj for level j based on a difference between the cell features determined at level j, to fit the second data set to the first data set at level j by reducing differences between cell features; and
associate, by the associating module Sx3, data points in the first set, and data points in the second set transformed by level-transform Tj, with cells at a next level j+1 of the common data structure based on cell ranges at level j+1;
until a stopping criterion is fulfilled;
the sensor system control unit further comprising a fitting module Sx7 configured to fit the first set of data points to the second set of data points by accumulating the determined level-transforms Tj.

Figure 9 shows a computer program product 900 comprising computer executable instructions 910. The computer executable instructions may, e.g., be executed by a sensor system control unit 120 as described above to perform the herein disclosed methods.

## Claims

1. A computer-implemented method for fitting a first set of data points to a second set of data points, where the data points in the first set and in the second set describe spatial coordinates captured by one or more sensors, the method comprising;
obtaining (S1) first and second sets of data points;
defining (S2) a common data structure comprising cells organized hierarchically in N levels i=1,2,...,N, where i=1 is a trunk level of the common data structure and wherein each cell is associated with a respective cell range of data point values, where a cell range partitions a space of the spatial coordinates; associating (S3) data points in the first set and in the second set with cells at an initialization level equal to or above the trunk level of the common data structure based on cell ranges and on data point values;
and, for each level j, starting from initialization level:
(a) determining (S4) at least one cell feature for one or more cells and for each data set based on data points associated with respective cells;
(b) determining (S5) a level-transform Tj for level j based on differences between respective cell features determined at level j, to fit the second data set to the first data set at level j by reducing differences between cell features, wherein the level-transform is a geometric linear transformation;
(c) associating (S6) data points in the first set, and data points transformed by level-transform Tj in the second set, with cells at a next level j+1 of the common data structure based on cell ranges at level j+1; until a stopping criterion is fulfilled, and;
(d) fitting (S7) the first set of data points to the second set of data points by accumulating the determined level-transforms Tj, wherein accumulating the determined level-transforms Tj for each level j comprises multiplying matrices representing linear transforms for each respective level j.

2. The method according to claim 1, wherein the first and/or second set of data points comprises LIDAR measurement data (S11) and/or RADAR measurement data (S12).

3. The method according to any previous claim, wherein the common data structure comprises any of an octree (S22), a quadtree, an octree map, a VDB-tree (S23), or a B+tree.

4. The method according to any previous claim, comprising defining (S24) the common data structure based on the first set of data points.

5. The method according to any previous claim, wherein the associating comprises discarding (S31) data points not comprised within any cell range of data point values.

6. The method according to any previous claim, wherein a cell feature comprises a data point value centroid, and wherein the level transform Tj is determined (S51) to minimize a respective objective function fj based on centroids of data point values in each cell.

7. The method according to claim 6, wherein the objective function fj is based on (S511) a point-to-point distance or point-to-plane distance or plane-to-plane distance metric.

8. The method according to claim 6 or 7, wherein the objective function is weighted (S512) by weights associated with the cells, wherein the weights are determined based on the number of data points associated with each cell and/or based on normal vector angles in each cell and/or based on time stamps associated with the data points in each cell.

9. The method according to any previous claim, wherein the first set of data points corresponds to target data, and the second set of data points corresponds to model or source data.

10. The method according to any of claims 1-8, wherein the second set of data points corresponds to target data, and the first set of data points corresponds to source or model data.

11. The method according to any previous claim, wherein the trunk level of the common data structure corresponds to a cell in a larger hierarchical data structure.

12. A computer-implemented method for fitting a third set of data points to a fourth set of data points, the method comprising:
(a1) partitioning (Sb1) the third and fourth sets of data points into corresponding pairs of subsets of data points based on data point values;
(b1) defining (Sb2) a common data structure map comprising a plurality of hierarchical common data structures; and
(c1) fitting (Sb3) each pair of subsets of data points to each other in a respective hierarchical common data structure according to any of claims 1-11.

13. A sensor system control unit (120) for a sensor system, arranged to fit a first set of data points to a second set of data points, where the data points in the first set and in the second set describe spatial coordinates captured by one or more sensors, the sensor system control unit comprising:
an obtaining module (Sx1) configured to obtain first and second sets of data points;
a defining module (Sx2) configured to define a common data structure comprising cells organized hierarchically in N levels i=1,2,...,N, where i=1 is a trunk level of the common data structure and wherein each cell is associated with a respective cell range of data point values, where a cell range partitions a space of the spatial coordinates;
an associating module (Sx3) configured to associate data points in the first set and in the second set with cells at an initialization level equal to or above the trunk level of the common data structure based on cell ranges and on data point values;
wherein the sensor system control unit is arranged to, for each level j, starting from the initialization level: level;
(A) determine, by a first determining module (Sx4), at least one cell feature for one or more cells and for each data set based on data points associated with respective cells;
(B) determine, by a second determining module (Sx5), a level-transform Tj for level j based on a difference between the cell features determined at level j, to fit the second data set to the first data set at level j by reducing differences between cell features, wherein the level-transform is a geometric linear transformation; and
(C) associate, by the associating module (Sx3), data points in the first set, and data points in the second set transformed by level-transform Tj, with cells at a next level j+1 of the common data structure based on cell ranges at level j+1; until a stopping criterion is fulfilled;
(D) the sensor system control unit further comprising a fitting module (Sx7) configured to fit the first set of data points to the second set of data points by accumulating the determined level-transforms Tj.

## Patentansprüche

1. Computerimplementiertes Verfahren zum Anpassen eines ersten Satzes von Datenpunkten an einen zweiten Satz von Datenpunkten, wobei die Datenpunkte in dem ersten Satz und in dem zweiten Satz räumliche Koordinaten beschreiben, die von einem oder mehreren Sensoren erfasst werden, wobei das Verfahren umfasst;
Erhalten (S1) eines ersten und eines zweiten Satzes von Datenpunkten;
Definieren (S2) einer gemeinsamen Datenstruktur, die Zellen umfasst, die hierarchisch in N Ebenen i = 1,2,..., N organisiert sind, wobei i = 1 eine Stammebene der gemeinsamen Datenstruktur ist und wobei jede Zelle einem jeweiligen Zellenbereich von Datenpunktwerten zugeordnet ist, wobei ein Zellenbereich einen Raum der räumlichen Koordinaten partitioniert;
Zuordnen (S3) von Datenpunkten in dem ersten Satz und in dem zweiten Satz zu Zellen auf einer Initialisierungsebene, die gleich oder über der Stammebene der gemeinsamen Datenstruktur ist, basierend auf Zellenbereichen und auf Datenpunktwerten;
und, für jede Ebene j, beginnend mit der Initialisierungsebene:
(a) Bestimmen (S4) mindestens eines Zellenmerkmals für eine oder mehrere Zellen und für jeden Datensatz basierend auf Datenpunkten, die jeweiligen Zellen zugeordnet sind;
(b) Bestimmen (S5) einer Ebenentransformation Tj für Ebene j basierend auf Differenzen zwischen jeweiligen Zellenmerkmalen, die auf Ebene j bestimmt werden, um den zweiten Datensatz auf Ebene j an den ersten Datensatz durch Reduzieren von Differenzen zwischen Zellenmerkmalen anzupassen, wobei die Ebenentransformation eine geometrische lineare Transformation ist;
(c) Zuordnen (S6) von Datenpunkten in dem ersten Satz und von Datenpunkten, die durch die Ebenentransformation Tj in dem zweiten Satz transformiert werden, zu Zellen auf einer nächsten Ebene j+1 der gemeinsamen Datenstruktur basierend auf Zellenbereichen auf Ebene j+1; bis ein Stoppkriterium erfüllt ist, und;
(d) Anpassen (S7) des ersten Satzes von Datenpunkten an den zweiten Satz von Datenpunkten durch Akkumulieren der bestimmten Ebenentransformationen Tj, wobei das Akkumulieren der bestimmten Ebenentransformationen Tj für jede Ebene j Multipliziermatrizen umfasst, die lineare Transformationen für jede jeweilige Ebene j darstellen.

2. Verfahren nach Anspruch 1, wobei der erste und/oder zweite Satz von Datenpunkten LIDAR-Messdaten (S11) und/oder RADAR-Messdaten (S12) umfasst.

3. Verfahren nach einem der vorstehenden Ansprüche, wobei die gemeinsame Datenstruktur eines von einem Octree (S22), einem Quadtree, einer Octree-Karte, einem VDB-Baum (S23) oder einem B+-Baum umfasst.

4. Verfahren nach einem der vorstehenden Ansprüche, umfassend ein Definieren (S24) der gemeinsame Datenstruktur basierend auf dem ersten Satz von Datenpunkten.

5. Verfahren nach einem der vorstehenden Ansprüche, wobei das Zuordnen ein Verwerfen (S31) von Datenpunkten umfasst, die nicht innerhalb eines beliebigen Zellenbereichs von Datenpunktwerten enthalten sind.

6. Verfahren nach einem der vorstehenden Ansprüche, wobei ein Zellenmerkmal einen Datenpunktwert-Schwerpunkt umfasst und wobei die Ebenentransformation Tj bestimmt wird (S51), um eine jeweilige Zielfunktion fj basierend auf Schwerpunkten von Datenpunktwerten in jeder Zelle zu minimieren.

7. Verfahren nach Anspruch 6, wobei die Zielfunktion fj auf einer Punkt-zu-Punkt-Abstands- oder Punkt-zu-Ebene-Abstands- oder Ebene-zu-Ebene-Abstandsmetrik basiert (S511).

8. Verfahren nach Anspruch 6 oder 7, wobei die Zielfunktion durch Gewichtungen, die den Zellen zugeordnet sind, gewichtet wird (S512), wobei die Gewichtungen basierend auf der Anzahl von Datenpunkten, die jeder Zelle zugeordnet sind, und/oder basierend auf Normalenvektorwinkeln in jeder Zelle und/oder basierend auf Zeitstempeln, die den Datenpunkten in jeder Zelle zugeordnet sind, bestimmt werden.

9. Verfahren nach einem der vorstehenden Ansprüche, wobei der erste Satz von Datenpunkten Zieldaten entspricht und der zweite Satz von Datenpunkten Modell- oder Quelldaten entspricht.

10. Verfahren nach einem der Ansprüche 1 bis 8, wobei der zweite Satz von Datenpunkten Zieldaten entspricht und der erste Satz von Datenpunkten Quell- oder Modelldaten entspricht.

11. Verfahren nach einem der vorstehenden Ansprüche, wobei die Stammebene der gemeinsamen Datenstruktur einer Zelle in einer größeren hierarchischen Datenstruktur entspricht.

12. Computerimplementiertes Verfahren zum Anpassen eines dritten Satzes von Datenpunkten an einen vierten Satz von Datenpunkten, wobei das Verfahren umfasst:
(a1) Partitionieren (Sb1) des dritten und des vierten Satzes von Datenpunkten in entsprechende Paare von Teilsätzen von Datenpunkten basierend auf Datenpunktwerten;
(b1) Definieren (Sb2) einer gemeinsamen Datenstrukturkarte, die eine Vielzahl von hierarchischen gemeinsamen Datenstrukturen umfasst; und
(c1) Anpassen (Sb3) jedes Paars von Teilsätzen von Datenpunkten aneinander in einer jeweiligen hierarchischen gemeinsamen Datenstruktur nach einem der Ansprüche 1 bis 11.

13. Sensorsystem-Steuereinheit (120) für ein Sensorsystem, das angeordnet ist, um einen ersten Satz von Datenpunkten an einen zweiten Satz von Datenpunkten anzupassen, wobei die Datenpunkte in dem ersten Satz und in dem zweiten Satz räumliche Koordinaten beschreiben, die von einem oder mehreren Sensoren erfasst werden, wobei die Sensorsystem-Steuereinheit umfasst:
ein Erhaltungsmodul (Sx1), das konfiguriert ist, um einen ersten und einen zweiten Satz von Datenpunkten zu erhalten;
ein Definitionsmodul (Sx2), das konfiguriert ist, um eine gemeinsame Datenstruktur zu definieren, die Zellen umfasst, die hierarchisch in N Ebenen i = 1,2,....,N organisiert, sind, wobei i = 1 eine Stammebene der gemeinsamen Datenstruktur ist und wobei jede Zelle einem jeweiligen Zellenbereich von Datenpunktwerten zugeordnet ist, wobei ein Zellenbereich einen Raum der räumlichen Koordinaten partitioniert;
ein Zuordnungsmodul (Sx3), das konfiguriert ist, um Datenpunkte in dem ersten Satz und in dem zweiten Satz Zellen auf einer Initialisierungsebene, die gleich oder über der Stammebene der gemeinsamen Datenstruktur ist, basierend auf Zellenbereichen und auf Datenpunktwerten zuzuordnen;
wobei die Sensorsystem-Steuereinheit, für jede Ebene j, ausgehend von der Initialisierungsebene: Ebene, angeordnet ist zum;
(A) Bestimmen, von einem ersten Bestimmungsmodul (Sx4), mindestens eines Zellenmerkmals für eine oder mehrere Zellen und für jeden Datensatz basierend auf Datenpunkten, die jeweiligen Zellen zugeordnet sind;
(B) Bestimmen, von einem zweiten Bestimmungsmodul (Sx5), einer Ebenentransformation Tj für Ebene j basierend auf einer Differenz zwischen den auf Ebene j bestimmten Zellenmerkmalen, um den zweiten Datensatz auf Ebene j durch Reduzieren von Differenzen zwischen Zellenmerkmalen an den ersten Datensatz anzupassen, wobei die Ebenentransformation eine geometrische lineare Transformation ist; und
(C) Zuordnen, von dem Zuordnungsmodul (Sx3), von Datenpunkten in dem ersten Satz und Datenpunkten in dem zweiten Satz, die durch die Ebenentransformation Tj transformiert werden, zu Zellen auf einer nächsten Ebene j+1 der gemeinsamen Datenstruktur basierend auf Zellenbereichen auf Ebene j+1; bis ein Stoppkriterium erfüllt ist;
(D) wobei die Sensorsystem-Steuereinheit ferner ein Anpassungsmodul (Sx7) umfasst, das konfiguriert ist, um den ersten Satz von Datenpunkten an den zweiten Satz von Datenpunkten anzupassen, indem die bestimmten Ebenentransformationen Tj akkumuliert werden.

## Revendications

1. Procédé mis en œuvre par ordinateur pour ajuster un premier ensemble de points de données à un deuxième ensemble de points de données, où les points de données dans le premier ensemble et dans le deuxième ensemble décrivent des coordonnées spatiales capturées par un ou plusieurs capteurs, le procédé comprenant ;
l'obtention (S1) de premier et deuxième ensembles de points de données ;
la définition (S2) d'une structure de données commune comprenant des cellules organisées hiérarchiquement en N niveaux i=1,2,...,N, où i=1 est un niveau de tronc de la structure de données commune et dans lequel chaque cellule est associée à une plage de cellules respective de valeurs de point de données, où une plage de cellules partitionne un espace des coordonnées spatiales ;
l'association (S3) de points de données dans le premier ensemble et dans le deuxième ensemble à des cellules à un niveau d'initialisation égal ou supérieur au niveau de tronc de la structure de données commune sur la base de plages de cellules et de valeurs de point de données ;
et, pour chaque niveau j, en partant du niveau d'initialisation :
(a) la détermination (S4) d'au moins une caractéristique de cellule pour une ou plusieurs cellules et pour chaque ensemble de données sur la base de points de données associés à des cellules respectives ;
(b) la détermination (S5) d'une transformée de niveau Tj pour le niveau j sur la base de différences entre des caractéristiques de cellule respectives déterminées au niveau j, pour ajuster le deuxième ensemble de données au premier ensemble de données au niveau j en réduisant des différences entre caractéristiques de cellule, dans lequel la transformée de niveau est une transformation linéaire géométrique ;
(c) l'association (S6) de points de données dans le premier ensemble, et de points de données transformés par la transformée de niveau Tj dans le deuxième ensemble, à des cellules à un niveau suivant j+1 de la structure de données commune sur la base de plages de cellules au niveau j+1 ; jusqu'à ce qu'un critère d'arrêt soit rempli, et ;
(d) l'ajustement (S7) du premier ensemble de points de données au deuxième ensemble de points de données en cumulant les transformées de niveau Tj déterminées, dans lequel le cumul des transformées de niveau Tj déterminées pour chaque niveau j comprend la multiplication de matrices représentant des transformées linéaires pour chaque niveau respectif j.

2. Procédé selon la revendication 1, dans lequel le premier et/ou le deuxième ensemble de points de données comprennent des données de mesure LIDAR (S11) et/ou des données de mesure RADAR (S12).

3. Procédé selon l'une quelconque revendication précédente, dans lequel la structure de données commune comprend l'un quelconque parmi un arbre octal (S22), un arbre quaternaire, une carte d'arbre octal, un arbre VDB (S23), ou un arbre B+.

4. Procédé selon l'une quelconque revendication précédente, comprenant la définition (S24) de la structure de données commune sur la base du premier ensemble de points de données.

5. Procédé selon l'une quelconque revendication précédente, dans lequel l'association comprend le rejet (S31) de points de données non compris au sein de n'importe quelle plage de cellules de valeurs de point de données.

6. Procédé selon l'une quelconque revendication précédente, dans lequel une caractéristique de cellule comprend un centroïde de valeur de point de données, et dans lequel la transformée de niveau Tj est déterminée (S51) pour minimiser une fonction objective fj respective sur la base de centroïdes de valeurs de point de données dans chaque cellule.

7. Procédé selon la revendication 6, dans lequel la fonction objective fj est basée sur (S511) une métrique de distance de point à point ou de distance de point à plan ou de distance de plan à plan.

8. Procédé selon la revendication 6 ou 7, dans lequel la fonction objective est pondérée (S512) par des pondérations associées aux cellules, dans lequel les pondérations sont déterminées sur la base du nombre de points de données associé à chaque cellule et/ou sur la base d'angles de vecteur normal dans chaque cellule et/ou sur la base d'horodatages associés aux points de données dans chaque cellule.

9. Procédé selon l'une quelconque revendication précédente, dans lequel le premier ensemble de points de données correspond à des données de cible, et le deuxième ensemble de points de données correspond à des données de modèle ou de source.

10. Procédé selon l'une quelconque des revendications 1 à 8, dans lequel le deuxième ensemble de points de données correspond à des données de cible, et le premier ensemble de points de données correspond à des données de source ou de modèle.

11. Procédé selon l'une quelconque revendication précédente, dans lequel le niveau de tronc de la structure de données commune correspond à une cellule dans une plus grande structure hiérarchique de données.

12. Procédé mis en œuvre par ordinateur pour ajuster un troisième ensemble de points de données à un quatrième ensemble de points de données, le procédé comprenant :
(a1) le partitionnement (Sb1) des troisième et quatrième ensembles de points de données en paires correspondantes de sous-ensembles de points de données sur la base de valeurs de point de données ;
(b1) la définition (Sb2) d'une carte de structure de données commune comprenant une pluralité de structures de données communes hiérarchiques ; et
(c1) l'ajustement (Sb3) de chaque paire de sous-ensembles de points de données les unes aux autres dans une structure de données commune hiérarchique respective selon l'une quelconque des revendications 1 à 11.

13. Unité de commande de système de capteur (120) pour un système de capteur, agencée pour ajuster un premier ensemble de points de données à un deuxième ensemble de points de données, où les points de données dans le premier ensemble et dans le deuxième ensemble décrivent des coordonnées spatiales capturées par un ou plusieurs capteurs, l'unité de commande de système de capteur comprenant :
un module d'obtention (Sx1) configuré pour obtenir des premier et deuxième ensembles de points de données ;
un module de définition (Sx2) configuré pour définir une structure de données commune comprenant des cellules organisées hiérarchiquement en N niveaux i=1,2,...,N, où i=1 est un niveau de tronc de la structure de données commune et dans lequel chaque cellule est associée à une plage de cellules respective de valeurs de point de données, où une plage de cellules partitionne un espace des coordonnées spatiales ;
un module d'association (Sx3) configuré pour associer des points de données dans le premier ensemble et dans le deuxième ensemble à des cellules à un niveau d'initialisation égal ou supérieur au niveau de tronc de la structure de données commune sur la base de plages de cellules et de valeurs de point de données ;
dans lequel l'unité de commande de système de capteur est agencée, pour chaque niveau j, en partant du niveau d'initialisation : niveau ;
(A) déterminer, par un premier module de détermination (Sx4), au moins une caractéristique de cellule pour une ou plusieurs cellules et pour chaque ensemble de données sur la base de points de données associés à des cellules respectives ;
(B) déterminer, par un deuxième module de détermination (Sx5), une transformée de niveau Tj pour le niveau j sur la base d'une différence entre les caractéristiques de cellule déterminées au niveau j, pour ajuster le deuxième ensemble de données au premier ensemble de données au niveau j en réduisant des différences entre les caractéristiques de cellule, dans lequel la transformée de niveau est une transformation linéaire géométrique ; et
(C) associer, par le module d'association (Sx3), des points de données dans le premier ensemble, et des points de données dans le deuxième ensemble transformé par la transformée de niveau Tj, à des cellules à un niveau suivant j+1 de la structure de données commune sur la base de plages de cellules au niveau j+1 ; jusqu'à ce qu'un critère d'arrêt soit rempli ;
(D) l'unité de commande de système de capteur comprenant en outre un module d'ajustement (Sx7) configuré pour ajuster le premier ensemble de points de données au deuxième ensemble de points de données en cumulant les transformées de niveau Tj déterminées.
